# EUROPÄISCHE PATENTANMELDUNG

(11) **EP 0 560 064 A1**
(43) Veröffentlichungstag der Anmeldung: **15.09.1993**
(21) Anmeldenummer: 93101975.6
(22) Anmeldetag: 09.02.1993
(51) Int. Cl.: A47J 31/40, A47J 47/04, A47G 19/34, G01F 11/24, G01F 11/46

(54) **Dosiervorrichtung für pulvriges oder körniges Dosiergut, wie Kaffeemehl**

(30) Priorität: 11.02.1992 DE 9202015 U
(71) Anmelder: COFFEETEAM KAFFEEMASCHINEN GmbH, D-97980 Bad Mergentheim (DE)
(72) Erfinder: Nagl, Günther, W-6990 Bad Mergentheim (DE)
(74) Vertreter: Müller, Hans-Jürgen, Dipl.-Ing.

(57) **Zusammenfassung**

Zum Dosieren von pulvrigem oder körnigem Dosiergut (D), wie Kaffeemehl, befindet sich unterhalb eines Aufnahmebehälters (8) für das Dosiergut, aber oberhalb einer zu einem Auffangbehälter (21) befindlichen Entleerungsöffnung (14) eine Dosierkammer (20). Diese ist hinsichtlich ihrer Aufnahmekapazität durch axiales Verstellen eines Einstellkolbens (3) einstellbar, der mit einem Bedienungsorgan (5) verbunden und axial innerhalb der Dosierkammer (20) mit Hilfe des Bedienungsorgans verstellbar ist.

## Beschreibung

Die Erfindung betrifft eine Dosiervorrichtung für z.B. Kaffeemehl der im Oberbegriff des Anspruchs 1 genannten Gattung.

Es ist bekannt, Kaffeemehl in einem Aufnahmebehälter zu bevorraten, der als Standgerät ausgebildet ist und in den das Dosiergut, z.B. das Mahlgut von Kaffeebohnen, gegebenenfalls mit Zusatzstoffe, eingefüllt wird und als Reservoir für den jeweiligen Gebrauch zur Verfügung steht. Soll eine Tasse Kaffee oder Espresso hergestellt werden, entnimmt die Bedienungsperson dem Aufnahmebehälter eine bestimmte Portion Kaffeemehl entsprechend der Kapazität einer Dosierkammer. Sowohl das Hantieren mit der Dosierkammer als auch das Umstellen von beispielsweise einer kleinen, für eine Tasse ausreichenden Portion zu einer größeren, für mehrere Tassen bestimmten Portion ist jedoch verhältnismäßig umständlich.

Der Erfindung liegt die Aufgabe zugrunde, eine Dosiervorrichtung der eingangs genannten Gattung mit einfachen Mitteln dahingehend zu verbessern, daß das Dosieren sowohl für kleine als auch für größere Portionen auf einfache Weise möglich ist.

Die Erfindung ist im Anspruch 1 gekennzeichnet und in Unteransprüche sind weitere Verbesserungen derselben beansprucht.

In der Beschreibung sind weitere Ausbildungen der Erfindung im einzelnen beschrieben.

Gemäß der Erfindung ist zwischen dem Kaffeefilter und dem Aufnahmebehälter -gewissermaßen in einer vertikalen Zwischenstellung zwischen denselben- eine Dosierkammer vorhanden, deren Kapazität insb. stufenlos mittels eines Einstellkolbens einstellbar ist.

Wäre die Dosierkammer fest auf eine bestimmte Kpazität eingestellt, gelangte nur eine entsprechend kleine Portion in den Kaffeefilter. Sollte der Wunsch bestehen, eine größere Menge Kaffeemehl in den Kaffeefilter oder in einen anderen Aufnahmebehälter abzufüllen, so wäre die Manipulation des Öffnens der Dosierkammern mehrfach durchzuführen, um eine vorausbestimmte Menge abzugeben. Bei der Erfindung ist dies nicht erforderlich, da nach vorheriger Kapazitätseinstellung ein einziges Öffnen der Dosierkammer genügt, um die jeweils ausgewählte Portion "auf einen Schlag" freizugeben.

Die Einstellung der Größe der Dosierkammer wird durch einen Kolben, der sich horizontal verstellen läßt, gewährleistet. Die Dosierkammer ist auf einer Mantelseite offe, um die gewünschte Dosiermenge von oben aufzunehmen. Durch Verdrehen um 180° gelangt die Öffnung zum Entleeren nach unten. Die Dosierkammer ist daher wahlweise einerseits nach oben -zur Aufnahme von Dosiergut- und andererseits nach unten -zur Abgabe der betreffenden Dosierportionen- durch Drehen des die Dosierkammer bildenden Mantels zu öffnen.

Nimmt der Aufnahmebehälter beispielsweise zwei Kilo Kaffeemehl auf, dann kann die Dosierkammer hinsichtlich ihrer Aufnahmekapazität insbesondere so gewählt werden, daß die kleinste Dosierkammer 10 Gramm und durch stufenloses ins. axiales Verstellen des Dosierkolben eine hierdurch vergrößerte Dosierkammer 90 Gramm und mehr Kaffeemehl aufnehmen kann. Wird ein den Dosierkolben mindestens teilweise umgebender Dosierzylinder als Mantel der Dosierkammer so gedreht, daß eine Wandaussparung in der Zylinderwand des Dosierzylinders offen ist, so rutscht Kaffeemehl aus dem Aufnahmebehälter aufgrund des Eigengewichts und durch Rütteln insb. einer Feder in die Dosierkammer. Anschließend wird der Dosierzylinder soweit um insb. 180° gedreht, bis das dort zwischengelagerte Kaffeemehl durch die nun freigegebene Bodenöffnung der Dosierkammer nach unten aus der Dosiervorrichtung herausfällt.

Wird der Dosierkolben lediglich so weit zurückgezogen, daß nur die kleinste Dosierkapazität geöffnet wird, so rieselt die kleinste Portion von, gemäß diesem Beispiel, 10 Gramm Kaffeemehl in die Dosierkammer, um beispielsweise 1 Tasse Kaffee zu brühen.

Soll dagegen ein größeres Quantum von 3-20 Tassen Kaffee hergestellt werden, wird der Dosierkolben durch horizontales Verstellen ein Stück weit aus der Dosierkammer, insb. dem Dosierzylinder, herausgezogen, so daß nun 90 Gramm Kaffeemehl in die Dosierkammer gelangt.

Da der Dosierzylinder mit Dosierkolben am wenigsten Platz in Anspruch nimmt und auch am einfachsten bedient werden kann, wird diese Ausbildung der Erfindung bevorzugt.

Besonders bevorzugte Ausbildungen der Erfindung werden im folgenden anhand der Beschreibung näher erläutert. Dabei zeigen:
- Fig. 1: einen schematischen teilschnitt einer bevorzugten Dosiervorrichtung nach der Erfindung;
- Fig. 2: eine schematische Aufsicht auf einen Teil der Dosiervorrichtung von Fig. 1 ohne die Darstellung des Betätigungsorgans und des Bedienungsorgans und
- Fig. 3: eine schematische Ansicht eines Aggregats der Dosiervorrichtung mit dem Dosierkolben, dem Bedienungsorgan und dem Betätigungsorgan in einer aus dem Dosiergerät herausgenommenen Stellung.

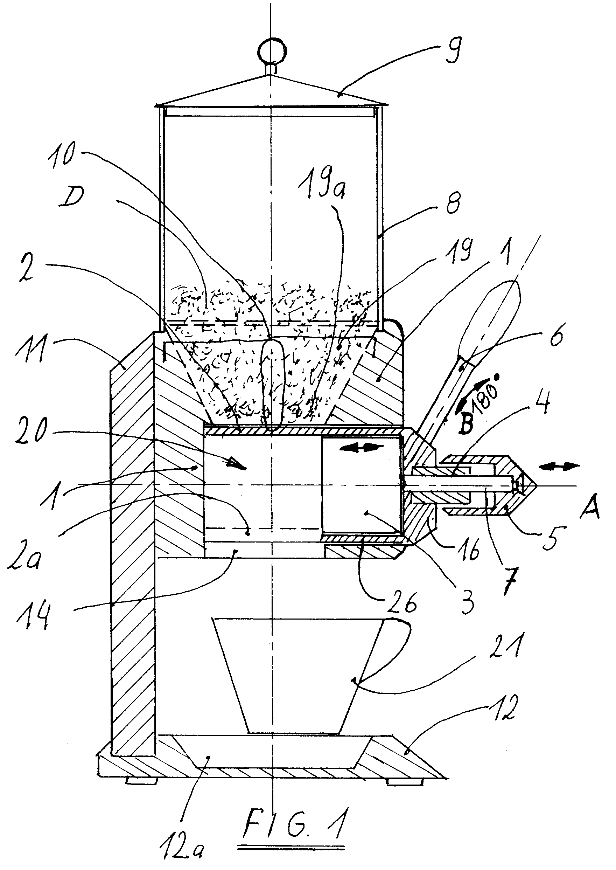

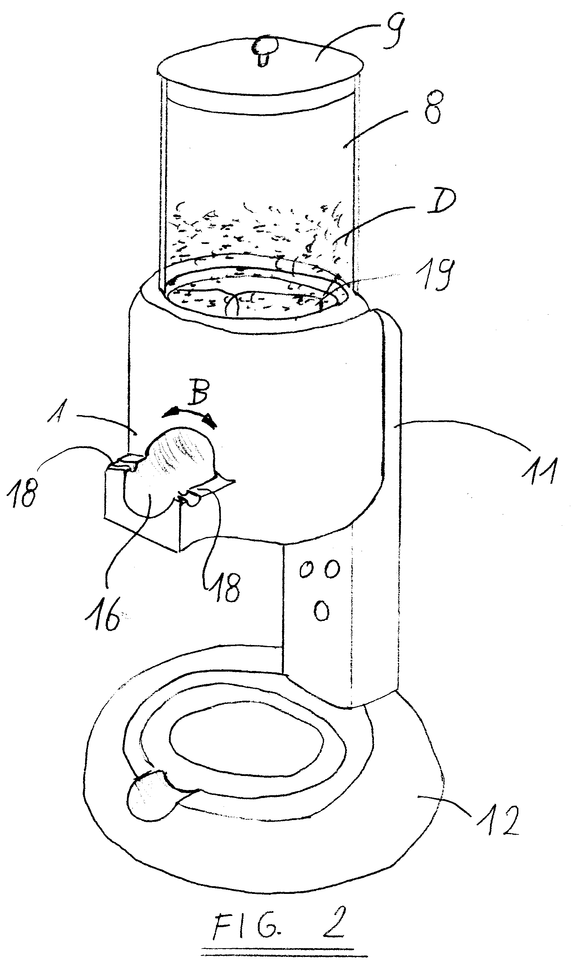

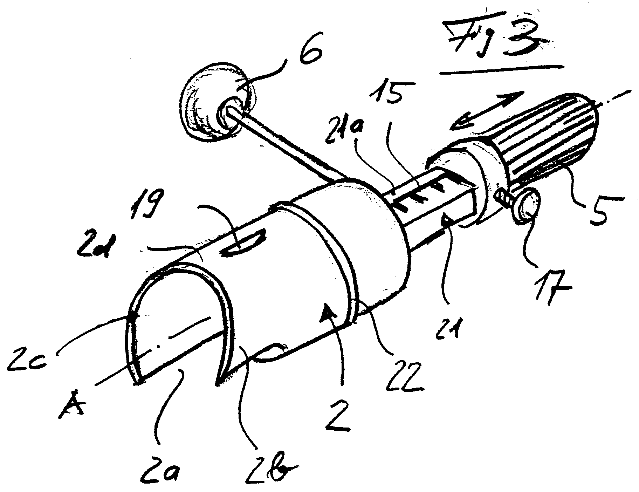

Gemäß Figur 1 ist ein Halter 1 an einem Ständer 11 angeschraubt der sich auf einem Fuß 12 der Dosiervorrichtung abstützt. Bei diesem Ausführungsbeispiel ist ein mit Dosiergut dosiert beschickter Auffangbehälter 21 in Form eines Kaffeefilterhalters im Begriff, aus der Ausnehmung 12a des Fusses 12 herausgenommen zu werden. Der Halter 1 ist mit einer sich von oben nach unten verjüngenden trichterförmigen Aussparung 19 versehen, die sich nach unten über eine Austrittsöffnung 19a dann in eine Dosierkammer 20 entleert, wenn diese nach oben, d.h. zur Austrittsöffnung 19a, nicht durch die Wand des Dosierzylinders 2 versperrt ist (in Fig. 1 sperrt die Zylinderwand des Dosierzylinders 2, dessen Stirnrand sich an den Halter 1 anlegt, ab). Auf den Halter 1 ist der Aufnahmebehälter 8 aus beispielsweise durchsichtigem Kunststoff aufgesetzt und oben mit einem Deckel 9 abgedeckt. In dem vom Aufnahmebehälter 8 gebildeten und nach unten in die trichterförmige Aussparung 19 des Halters 1 sich öffnenden Raum ist Dosiergut D, z.B. gemahlener Kaffee, eingefüllt. An der äußeren Mantelfläche des Dosierzylinders 2 reibt eine Feder 10 entlang, welche durch Unebenheiten an der äußeren Mantelfläche des Dosierzylinders 2 zu Bewegungen veranlaßt wird, um so auch das Dosiergut D in einer gewissen Rüttelbewegung vor allem dann zu bringen, wenn der Weg in die Dosierkammer 20 durch Verdrehen des Dosierzylinders 2 um die Achse A freigegeben wird. Der Dosierzylinder 2 ist im Halter 1 in einem Lager 16 gelagert, wie dies noch anhand der Figuren 2 und 3 näher erläutert wird. Innerhalb des Dosierzylinders 2 befindet sich ein Dosierkolben 3, der in Pfeilrichtung, d.h. in Axialrichtung der Schwenkachse A, verschiebbar ist, wodurch sich die Kapazität der Dosierkammer 20 ändert. Der Dosierzylinder 2 ist andererseits durch Verschwenken des Betätigungsorgans 6 um die Schwenkachse A schwenkbar, wodurch die Wandaussparung 2a in der Zylinderwand des Dosierzylinder 2 aus der in Fig. 1 dargestellten unteren Lage um etwa 180° nach oben schwenkbar ist, um dann das Einrieseln von Dosiergut D in die Dosierkammer 20 zu erlauben. In der Stellung von Fig. 1 ist dagegen die Dosierkammer 20 nach unten offen, denn die Wandaussparung 2a überlappt die Entleerungsöffnung 14, so daß kein Dosiergut mehr in der Dosierkammer 20 vorhanden sein kann. In der um 180° nach oben gedrehten Stellung der Wandaussparung 2a befindet sich dagegen die Zylinderwand des Dosierzylinders 2 unten und deckt die Entleerungsöffnung 14 ab, so daß einrieselndes Dosiergut D nicht nach unten austreten kann.

Die Axialverstellung des Dosierkolbens 3 erfolgt durch das Bedienungsorgan 5, das ein Stück weit auf seiner Führung 4, z.B. den in Fig. 3 gezeigten Zapfen 21, nach Fig. 1 in Richtung zum Halter 1 geschoben wird. Das Bedienungsorgan 5 ist hier als hülsenförmiger Handgriff ausgebildet und an die Stange 7 angeschraubt, welche mit dem Dosierkolben 3 in Verbindung steht.

In Fig. 2 ist dargestellt, daß der Halter 1 ein zylinderförmiges bzw. teilzylinderförmiges Lager 16 aufweist, das ein Stück weit bis über den im wesentlichen zylinderförmigen Umfang des Halters 1 nach vorn absteht, um dort zwei Vorsprünge 18 zu bilden, die die Schwenkbewegung des Betätigungsorgans 6 um die Schwenkachse A bzw. in Richtung der Schwenkpfeile B begrenzen.

Dieses Betätigungsorgan 6 ist nach Fig. 3 mit dem Dosierzylinder 2 verbunden, so daß dieser mit dem im Querschnitt etwa rechteckförmigen Zapfen 21 um die Schwenkachse A schwenkbar ist. Derjenige Teil der Mantelfläche des Dosierzylinders 2, der in dem zylinderförmigen Teil des Lagers 16 eingesetzt ist, kann mit einem Filzring 22 ausgestattet sein, der eine Art Abdichtung bildet, damit verhindert wird, daß Dosiergut in Axialrichtung A aus der Dosierkammer 20 in das Lager 16 gelangt. Der vordere, im Einbauzustand sich mit seiner Stirnseite 2a an den Halter 1 anlegenden Teil des Dosierkolbens 2 weist an seiner äußeren Mantelfläche eine Einkerbung 19 auf, so daß ein Teil der Feder 10 dort entlangschabt und beim Drehen des Dosierzylinders 2 in Bewegung bzw. Schwingung gesetzt wird. Im Innenraum des Dosierzylinders 2 ist der in Fig. 3 nicht dargestellte Dosierkolben 3 dadurch axial bewegbar, daß das als hülsenförmiger Handgriff ausgebildete Bedienungsorgan 5 durch Lösen der Feststellschraube 17 längs des Zapfens 21 in Pfeilrichtung verstellt wird. Auf der in Fig. 3 oberen Fläche 21a des Zapfens 21 befindet sich eine Kapazitätsskala 15, so daß aus der Stellung des Bedienungsorgans 5 auf der Skala 15 die Kapazität der Dosierkammer 20 abgelesen werden kann, die sich im Innenraum des Dosierzylinders 2 befindet. Im vorderen Teil des Dosierzylinders 2 befindet sich an einer Seite die Mantelaussparung 2a (in Fig. 1 und 3 nach unten weisend), während die Zylinderwand 2b an der nach oben weisenden Stelle 2d eine Absperrung nach oben bildet, wenn der Dosierzylinder 2 sich in der in Fig. 1 gezeigten Stellung befindet.

In dem Bereich unterhalb der oberen Begrenzungsflächen der Vorsprünge 18 kann sich eine Gewindebohrung befinden, durch die eine Schraube hindurchschraubbar ist, um als Sperrorgan zu dienen, wenn das in Fig. 3 dargestellte Aggregat in den Halter 1 so hineingeschoben ist, daß nur noch der Zapfen 12 mit dem Bedienungsorgan 5 nach vorn ragen.

## Patentansprüche

1. Dosiervorrichtung für pulvriges oder körniges Dosiergut (D), wie Kaffeemehl, mit einem Aufnahmebehälter (8) für das Dosiergut (D), mit einer Dosierkammer (20) zum Dosieren jeweils einer Portion des Dosierguts (D), und mit einer Entleerungsöffnung (14), aus der die dosierte Portion des Dosierguts (D) jeweils bei Betätigung einer Betätigungsorgans (6) in einen Auffangbehälter (21), z.B. einen Kaffeefilter, entleerbar ist,
**dadurch gekennzeichnet**,
daß die Dosierkammer (20) unterhalb einer Austrittsöffnung (19a) für das Dosiergut (D) aus dem Aufnahmebehälter (8), aber oberhalb der Entleerungsöffnung (14) angeordnet und hinsichtlich ihrer Aufnahmekapazität durch Verstellen eines Einstellkolbens (3) einstellbar ist, der mit einem Bedienungsorgan (5) verbunden und durch dessen Betätigen axial innerhalb der Dosierkammer (20) verstellbar ist.

2. Dosiervorrichtung nach Anspruch 1,
**dadurch gekennzeichnet**,
daß die Dosierkammer (20) mindestens von einem in einem Halter (1) für den Aufnahmebehälter (8) drehbar gelagerten Dosierzylinder (2) mit einer zur Bildung einer Wandaussparung (2a) dienenden Durchbrechung in der Zylinderwand (2b) und von dem Einstellkolben (3) begrenzt ist.

3. Dosiervorrichtung nach Anspruch 2,
**dadurch gekennzeichnet**,
daß sich die Wandaussparung (2a) des Dosierzylinders (2) über einen Winkelbereich zwischen etwa 90° und 180° über den Kreisumfang erstreckt.

4. Dosiervorrichtung nach einem der vorhergehenden Ansprüche,
**dadurch gekennzeichnet**,
daß die Dosierkammer (20) an der dem Einstellkolben (3) entgegengesetzten Stirnseite (2c) vom Halter (1) begrenzt ist.

5. Dosiervorrichtung nach einem der vorhergehenden Ansprüche,
**dadurch gekennzeichnet**,
daß das Betätigungsorgan (6) als Hebel ausgebildet und mit dem Dosierzylinder (2) um dessen Schwenkachse (A) verschwenkbar ist.

6. Dosiervorrichtung nach einem der vorhergehenden Ansprüche,
**dadurch gekennzeichnet**,
daß der Einstellkolben (3) innerhalb des Dosierzylinders (2) in Axialrichtung der Schwenkachse (A) verschiebbar sowie außerhalb eines Lagers (16) für den Dosierzylinder (2) des Lagers (16) mit dem Bedienungsorgan (5) verbunden ist.

7. Dosiervorrichtung nach Anspruch 6,
**dadurch gekennzeichnet**,
daß das Bedienungsorgan (5) als hülsenförmiger Handgriff ausgebildet und längs einer Kapazitätsskala (15) verschiebbar ist, die mit dem Dosierzylinder (2) drehfest verbunden ist.

8. Dosiervorrichtung nach Anspruch 7,
**dadurch gekennzeichnet**,
daß sich die Kapazitätsskala (15) auf einer Fläche (21a) eines vom Halter (1) bzw. Lager (16) vorstehenden und mit dem Dosierzylinder (2) schwenkbaren Zapfens (21) befindet, die in der Entleerungsstellung der Dosierkammer (20) nach oben weist.

9. Dosiervorrichtung nach Anspruch 7 oder 8,
**dadurch gekennzeichnet**,
daß das Bedienungsorgan (5) mittels einer Feststellschraube (17) in Bezug zur Kapazitätsskala (15) feststellbar ist.

10. Dosiervorrichtung nach einem der vorhergehenden Ansprüche,
**dadurch gekennzeichnet**,
daß der Dosierzylinder (2) in der Füllstellung der Dosierkammer (20) mit einer Ausnehmung (2a) zum Aufnahmebehälter (8) nach oben, in seiner dazu um etwa 180° in Rotationsrichtung (B) um die Schwenkachse (A) gedrehten Stellung dagegen zur Entleerungsöffnung (14) nach unten weist oder diese bildet.

11. Dosiervorrichtung nach einem der vorhergehenden Ansprüche,
**dadurch gekennzeichnet**,
daß der Dosierzylinder (2) mit dem Einstellkolben (3) in ein im wesentlichen zylindrisches Lager (16) des Halters (1) derart einsteckbar ist, daß das Betätigungsorgan (6) in der Füll- und in der Entleerungsstellung jeweils auf einem Vorsprung (18) des Halters (1) sich abstützt und zwischen beiden Stellungen oberhalb der Vorsprünge (18) um etwa 180° in Schwenk- bzw. Rotationsrichtung (B) um die Schwenkachse (A) schwenkbar ist.

12. Dosiervorrichtung nach einem der vorhergehenden Ansprüche,
**dadurch gekennzeichnet**,
daß der Dosierzylinder (2) an der äußeren Mantelfläche (2d) im Bereich der Austrittsöffnung (19a) des Aufnahmebehälters (8) eine Einkerbung (19) aufweist, an der eine Feder (10) beim Drehen des Dosierzylinders (2) verhakbar und ein Stück weit spannbar, dann aber von der Einkerbung (19) wieder freigebbar ist.

13. Dosiervorrichtung nach Anspruch 12,
**dadurch gekennzeichnet**,
daß sich die Feder (19) innerhalb eines zur Austrittsöffnung (19a) aus dem Aufnahmebehälter (8) hinführenden Austrittstrichters (19) desselben erstreckt.

14. Dosiervorrichtung nach einem der vorhergehenden Ansprüche,
**gekennzeichnet durch**
die Ausbildung als Standgerät, auf dessen Fuß (12) der Auffangbehälter (14) aufsetzbar ist und bei dem ein transparenter Aufnahmebehälter (8) auf den Halter (1) aufsetzbar ist, der die Austrittsöffnung (19a) und die Entleerungsöffnung (14) aufweist.
